# EUROPÄISCHE PATENTSCHRIFT

(11) **EP 0 918 979 B1**
(45) Veröffentlichungstag und Bekanntmachung des Hinweises auf die Patenterteilung: **24.10.2001**
(21) Anmeldenummer: 97938903.8
(22) Anmeldetag: 14.08.1997
(51) Int. Cl.: G01C 11/02

(54) **STEREOKAMERA FÜR DIE PHOTOGRAMMETRIE**
STEREOCAMERA FOR PHOTOGRAMMETRY
CAMERA STEREOSCOPIQUE POUR LA PHOTOGRAMMETRIE

(30) Priorität: 16.08.1996 DE 19633868
(43) Veröffentlichungstag der Anmeldung: 02.06.1999
(73) Patentinhaber: DLR Deutsches Zentrum für Luft- und Raumfahrt e.V., 53175 Bonn (DE)
(72) Erfinder: BÖRNER, Anko, D-12526 Berlin (DE); REULKE, Ralf, D-15745 Wildau (DE)
(74) Vertreter: Effert, Bressel und Kollegen
(86) Internationale Anmeldenummer: EP9704443
(87) Internationale Veröffentlichungsnummer: WO9808053

(56) Entgegenhaltungen:
- EP-A- 0 037 530
- EP-A- 0 361 297
- DE-C- 4 213 281

## Beschreibung

Die Erfindung betrifft eine Stereokamera für die Photogrammetrie gemäß dem Oberbegriff des Patentanspruchs 1.

Zur Erstellung von Geländeprofilen für Karten werden heute noch Kameras mit herkömmlichen Filtern eingesetzt. Die Daten des aufgenommenen Filmes werden anschließend digitalisiert und mit bekannten Auswerteverfahren der Photographie in ein Geländeprofil umgerechnet.

Einen wesentlichen Fortschritt gegenüber der klassischen Photographie stellt die digitale Photogrammetrie dar. Die Grundlagen hierfür werden einerseits durch hochauflösende digitale Bildaufnahmegeräte und andererseits durch hochgenaue Positions- und Lagegeber wie z. B. Differential-GPS oder Faser-Kreisel geschaffen. Der klassische Film wird dabei durch optische Detektoren wie z.B. CCD-Bauelemente ersetzt. Der Vorteil der digitalen Photogrammetrie liegt darin, daß die aufgenommenen Daten sofort in digitaler Form vorliegen und nicht erst digitalisiert werden, was eine erhebliche Zeitersparnis zur Folge hat. Zur Bestimmung von Höhenwerten eines Punktes eines beobachteten Geländes sind mindestens zwei Aufnahmen des Gebietes aus unterschiedlichen Positionen nötig. Dies kann durch Mehrfachüberfliegung eines Gebietes oder durch Verwendung mehrere Kamerasysteme und der Erzeugung sich überlappender Bilder realisiert werden.

Aus dem Fachartikel "Dynamische Photogrammetrie; Zeitschrift für Photogrammetrie und Fernerkundung, Bildmessung und Luftbildwesen, Otto Hofmann, 3/86 S. 105 ff." ist eine Stereokamera mit drei CCD-Zeilen bekannt, mit der bei nur einem Überflug ein Gelände aufgezeichnet werden kann unter Ausnutzung der Eigenbewegung des die Stereokamera tragenden Flugzeugs oder Satelliten. Das Grundprinzip beruht darauf, mittels dreier CCD-Zeilen sich überdekkende Bildaufnahmen eines Geländepunktes aus unterschiedlichen Perspektiven aufzunehmen. Um einerseits bei der Berechnung der Höhenwerte eine größere numerische Stabilität zu erreichen und andererseits zu verhindern, daß stark strukturiertes Gelände für bestimmte Zeilen unsichtbar ist, werden in der Regel statt der theoretisch nur nötigen zwei CCD-Zeilen mindestens drei CCD-Zeilen verwendet.

Dazu werden auf einer im Abstand f zum Hauptpunkt der Eingangsoptik gelegenen Fokalebene drei CCD-Zeilen im äquidistanten Abstand parallel zueinander angeordnet. Durch den Versatz einmal in positive und einmal in negative Richtung zur Hauptachse der Eingangsoptik schaut eine CCD-Zeile nach vorn, eine nach unten und die dritte nach hinten. Der Winkel, der durch die Fokallänge und den Abstand zwischen den CCD-Zeilen beschrieben wird, ist der Stereowinkel α. Zur geometrischen Rekonstruktion des Streifenmodells werden anschließend homologe Bildpunkte der drei Bildstreifen durch Flächenkorrelation bestimmt, wobei dann diese Bildpunkte annähernd netzförmig angeordnet sind. Es folgt die Bestimmung der sechs äußeren Orientierungsparameter des Stereo-Abtasters in sogenannten Aufnahmestützpunkten in regelmäßigen Zeitintervallen längs des Flugweges und die Bestimmung der Geländekoordinaten derjenigen Punkte, die den korrelierten Bildpunkten zugeordnet sind. Diese Stereokameras wurden bereits erfolgreich in dem Beitrag der DLR zur Mars 96 Mission WAOSS "Wide Angle Optoelectronic Stereo Scanner (WAOSS), Mars 94 Mission, Phase B Study, WAOSS Technical Part; Berlin 1991" und deren Nachfolgemodell WACC "Wide Angle Airborne Camera, OEPE Workshop, Digital Camera, IGN Paris 28.-29.9.1994, A. Eckardt" eingesetzt.

Aus der DE 42 13 281 ist eine Stereokamera für die Photogrammetrie bekannt, die eine Eingangsoptik und eine Vielzahl von optischen Detektoren umfaßt, die in der Fokalebene (Kamera-Bildebene) angeordnet sind. Dabei werden mindestens drei Abtastzeilen zueinander ungleichförmig beabstandet angeordnet, so daß sich jeweils zwischen zwei benachbarten Abtastzeilen ein unterschiedlicher Stereowinkel einstellt. Dadurch wird eine dichte Folge miteinander verknüpfbarer Stützstellen erzielt, mittels derer genau auf die Position der Stereokamera zurückgeschlossen werden kann. Zur Einstellung von gewünschten, unterschiedlichen Stereowinkeln zwischen den optischen Detektoren sind diese in Fokalebene verschiebbar ausgebildet, so daß vor der Inbetriebnahme eine gewünschte Vorjustage der Stereowinkel vorgenommen werden kann. Während des Betriebes sind dann die eingestellten Stereowinkel fest.

Einen wesentlichen Einfluß auf die Güte des zu erstellenden Geländemodells hat der zuvor beschriebene Stereowinkel α, wobei der optimale Wert dieses Parameters vom dem zu beobachtenden Gelände abhängig ist. Für die Größe des Stereowinkels α gibt es bisher keine zuverlässigen Untersuchungen. Da Experimentelle Untersuchungen zu teuer oder unmöglich sind, wurde mittels eines Simulationstools eine solche Optimierung durchgeführt "Börner, A: Simulation optoelektronischer Systeme; Diplomarbeit, TU Ilmenau 1995". Die wesentlichsten Ergebnisse dieser Untersuchung lassen sich wie folgt zusammenfassen:
- Grundsätzlich sollten Stereowinkel α größer als 10° und kleiner als 40° (Weitwinkelkamera) gewählt werden,
- der optimale Stereowinkel α hängt entscheidend von der Höhendynamik des überflogenen Gebietes ab, wobei unter Höhendynamik die Änderung der Höhenwerte des überflogenen Gebietes zu verstehen ist. Für flaches Gebiet spielt der Stereowinkel α keine wesentliche Rolle. Dagegen wird der Bereich des zulässigen Stereowinkels α bei einer großen Höhendynamik des Geländes wesentlich eingeschränkt, was insbesondere beim Überfliegen urbaner Gebiete zutrifft,
- ein Stereowinkel α zwischen 15° und 20° bietet für alle simulierten Fälle eine optimale Qualität bei der Erstellung von digitalen Geländemodellen.

Nachteilig an den bekannten Stereokameras für die digitale Photogrammetrie ist, daß der Stereowinkel α festgeschrieben ist, daß dadurch jegliche Veränderungen des Geländes bzw. der Aufnahmebedingungen unberücksichtigt bleiben. So ist z.B. die Kombination vorwärts- und rückwärtsschauende CCD-Zeilen zur Stereorekonstruktion bei hochelliptischen Orbits wegen der unterschiedlichen Entfernung bei der Aufnahme der gleichen Gebiete ungeeignet. Auch in urbanen Gebieten sind die aufgezeichneten Bilder sehr stark vom Beobachtungswinkel abhängig, so daß die empfohlenen Stereowinkel α von 15° bereits zu groß sind und daher im suboptimalen Bereich gearbeitet werden muß.

Aus der EP- 0 037 530 ist eine Stereokamera für die Photogrammetrie bekannt, die eine Eingangsoptik und mindestens zwei zeilenförmige optische Detektoren umfaßt, die in der Fokalebene angeordnet sind. Zur Einstellung unterschiedlicher Stereowinkel sind die optischen Detektoren auf der Fokalebene verschiebbar angeordnet, so daß durch eine Veränderung des Abstandes der zeilenförmigen optischen Detektoren ein unterschiedlicher Stereowinkel vorjustiert werden kann. Während des Betriebes der Stereokamera bleibt der eingestellte Stereowinkel unverändert. Werden wahlweise unterschiedliche Stereowinkel benötigt, werden eine Vielzahl von optischen Detektoren fest in der Fokalebene angeordnet, und die jeweils für den gewünschten Stereowinkel benötigten optischen Detektoren zur Bildaufzeichnung herangezogen.

Der Erfindung liegt von daher das technische Problem zugrunde, eine Stereokamera zu schaffen, mittels derer eine gleichbleibende Aufnahmequalität für unterschiedlich strukturiertes Gelände mit möglichst wenig Bilddaten erreichbar ist.

Das Problem wird durch die Merkmale des Patentanspruchs 1 gelöst. Durch die Zuordnung eines Speichermediums, in dem Vorab-Informationen über ein aufzunehmendes Objekt abgelegt sind, in Ahhängikeit derer der jeweilige Stereowinkel der optischen Detektoren ausgewählt wird, kann der Stereowinkel jederzeit an die Gegebenheiten des Geländes angepaßt werden, wodurch eine optimale Genauigkeit bei der Vermessung erreicht wird. Weitere vorteilhafte Ausgestaltungen der Erfindung ergeben sich aus den Unteransprüchen.

Zusätzlich können diese Vorab-Informationen auch direkt von der Stereokamera mittels einer geeigneten Einrichtung erfaßt werden.

Durch die Anordnung eines Multiplexers zwischen den optischen Detektoren und der Auswertungseinrichtung läßt sich die wahlweise Ansteuerung einfach und zuverlässig realisieren. Bei Verwendung einer monolithischen CCD-Matrix ist der Multiplexer darüber hinaus bei Bedarf einfach mitzuintegrieren.

Durch die Verwendung von spektralen Filterschichten oder Mikrolinsen läßt sich das zu vermessende Objekt auch in unterschiedlichen Spektralbereichen bestimmen.

Die Erfindung wird nachfolgend anhand eines bevorzugten Ausführungsbeispieles näher erläutert. Die Figuren zeigen:

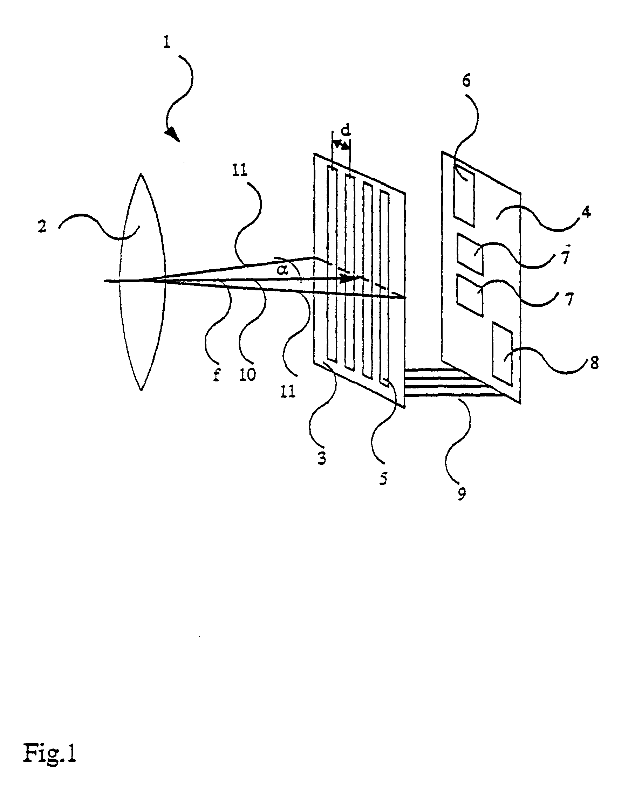

- Fig. 1:: eine schematische Perspektivansicht der Stereokamera und
- Fig: 2:: ein Blockschaltbild von Fokalebene und Auswerteeinrichtung.

Die Stereokamera 1 umfaßt eine Eingangsoptik 2, eine Fokalebene 3 und eine Leiterplatte 4. Die Fokalebene 3 ist in der Brennebene der Eingangsoptik 2 im Abstand f angeordnet. Auf der Fokalebene 3 sind im äquidistanten Abstand d mehrere CCD-Zeilen 5 angeordnet.

Die Leiterplatte 4 umfaßt eine Auswerteeinrichtung 6, mehrere Speicherelemente 7 und einen Multiplexer 8. Die CCD-Zeilen 5 sind durch einen Daten-Bus 9 mit dem Multiplexer 8 verbunden. Der Ausgang des Multiplexers 8 ist mit dem Eingang der Auswerteeinrichtung 6 verbunden. Zusätzlich kann der Ausgang des Multiplexers 8 mit einem der Speicherelemente 7 verbunden sein. Der Datenausgang der Auswerteeinrichtung 6 ist ebenfalls mit dem Eingang der Speicherelemente 7 verbunden. Die Auswerteeinrichtung 6 steuert mittels eines weiteren Steuersignals entsprechend den Vorab-Informationen über das aufzunehmende Objekt den Multiplexer 8 an. Diese Vorab-Informationen über das aufzunehmende Objekt sind beispielsweise in einem der Auswerteeinrichtung 6 zugeordnetem Speichermedium abgelegt. Das von einem zu beobachtenden Objekt ausgesandte bzw. reflektierte Licht fällt auf die Eingangsoptik 2 und wird von der Eingangsoptik 2 auf die Fokalebene 3 abgebildet, so daß alle auf der Fokalebene 3 angeordneten CCD-Zeilen 5 bestrahlt werden. Der von der Hauptachse 10 und Schenkel 11 gebildete Winkel wird als Stereowinkel α bezeichnet. Der Stereowinkel α kann dabei Werte zwischen - 40° und + 40° annehmen. Die jeweiligen Daten einer CCD-Zeile 5 liegen über den Bus 9 am Dateneingang des Multiplexers 8 an, wobei mittels der Auswerteeinrichtung 6 der Multiplexer 8 derart angesteuert wird, daß nur die Daten bestimmter CCD-Zeilen 5 zur Auswerteeinrichtung 6 durchgeschaltet werden. Überfliegt die Stereokamera 1 z. B. flaches Gelände wie eine Wüste, so sind z.B. die beiden äußeren CCD-Zeilen 5 durchgeschaltet. Überfliegt nun die Stereokamera 1 plötzlich ein Gebiet mit größerer Höhendynamik wie z. B. ein Gebirge oder eine Stadt, so ändert die Auswerteeinrichtung 6 ihr Steuersignal an den Multiplexer 8, so daß nunmehr jeweils eine CCD-Zeile 5 mit kleinerem Stereowinkel α durchgeschaltet wird. Durch geeignete Regelschleifen kann dann der jeweils optimale Stereowinkel α ausgewählt werden. Bei Bedarf können auch CCD-Zeilen 5 unterschiedlicher Stereowinkel α ausgewählt werden, so z. B. bei der Beobachtung aus elliptischen Orbits.

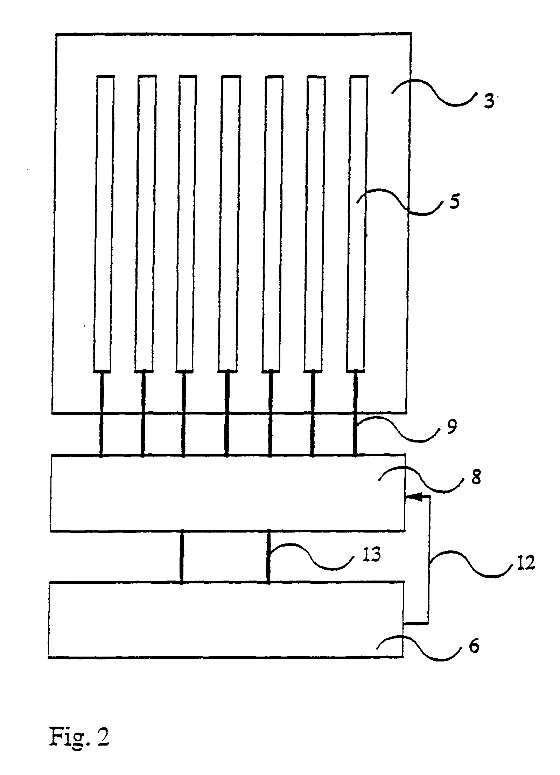

In der Figur 2 ist ein Blockschaltbild von der Fokalebene 3 und der Auswerteinrichtung 6 dargestellt. Die Daten einer jeden CCD-Zeile 5 liegen über den Datenbus 9 am Dateneingang des Multiplexers 8 an. Mittels einer Steuerleitung 12 wählt die Auswerteeinrichtung 6 zwei CCD-Zeilen 5 aus, deren Daten über eine Datenleitung 13 dem Eingang der Auswerteeinrichtung 6 zugeführt werden und dort weiterverarbeitet werden.

## Patentansprüche

1. Stereokamera für die digitale Photogrammetrie, umfassend eine Eingangsoptik und eine Vielzahl in der Fokalebene der Eingangsoptik angeordnete optische Detektoren, deren Ausgangssignale in einer Auswerteeinrichtung zu einer Bildinformation verarbeitbar sind, wobei jeweils mindestens zwei der optischen Detektoren wahlweise zur Einstellung eines veränderbaren Stereowinkels ansteuerbar sind,
**dadurch gekennzeichnet, daß**
der Stereokamera (1) ein Speichermedium zugeordnet ist, in dem Vorab-informationen über ein aufzunehmende Objekt abgelegt und in Abhängigkeit der Vorab-Informationen vom aufzunehmenden Objekt der Stereowinkel der optischen Detektoren einstellbar ist.

2. Stereokamera nach Anspruch 1, **dadurch gekennzeichnet, daß** die Stereokamera (1) eine Einrichtung zur Erfassung von Vorab-Informationen über das nachfolgend aufzunehmende Objekt umfaßt.

3. Stereokamera nach Anspruch 1 oder 2, **dadurch gekennzeichnet, daß** die optischen Detektoren als CCD-Matrix oder CCD-Zeilen (5) ausgebildet sind, die in Hybrid-Technik auf einen Träger aufgebracht sind.

4. Stereokamera nach einem der vorangegangenen Ansprüche, **dadurch gekennzeichnet, daß** zur wahlweisen Ansteuerung zwischen den optischen Detektoren und der Auswertungseinrichtung (6) ein Multiplexer (8) angeordnet ist.

5. Stereokamera nach einem der vorangegangenen Ansprüche, **dadurch gekennzeichnet, daß** benachbarte optische Detektoren mit unterschiedlichen spektralen Filterschichten oder Mikrolinsen versehen sind.

6. Stereokamera nach einem der vorangegangenen Ansprüche, **dadurch gekennzeichnet, daß** der Stereowinkel α zwischen der Hauptachse (10) und einem Schenkel (11) eines optischen Detektors zwischen - 40° und + 40° beträgt.

## Claims

1. Stereoscopic camera for digital photogrammetry, including an input optical system and a plurality of optical detectors, which are disposed in the focal plane of the input optical system, and the output signals of which can be processed in an evaluating means to form image information, at least two of the optical detectors at a time being selectively actuatable to set a variable stereoscopic angle, **characterised in that** the stereoscopic camera (1) has, associated therewith, a storage medium in which preliminary information about an object to be photographed is deposited, and the stereoscopic angle of the optical detectors can be set in dependence on the preliminary information of the object to be photographed.

2. Stereoscopic camera according to claim 1, **characterised in that** the stereoscopic camera (1) includes a means for collecting preliminary information about the object which is to be subsequently photographed.

3. Stereoscopic camera according to claim 1 or 2, **characterised in that** the optical detectors are a CCD matrix or CCD lines (5), which are applied to a carrier by hybrid technology.

4. Stereoscopic camera according to one of the preceding claims, **characterised in that** a multiplexer (8) is disposed between the optical detectors and the evaluating means (6) for selective actuation purposes.

5. Stereoscopic camera according to one of the preceding claims, **characterised in that** adjacent optical detectors are provided with different spectral filter layers or micro-lenses.

6. Stereoscopic camera according to one of the preceding claims, **characterised in that** the stereoscopic angle α between the main axis (10) and a side (11) of an optical detector is between -40° and +40°.

## Revendications

1. Caméra stéréoscopique pour la photogrammétrie numérique, comprenant une optique d'entrée et une pluralité de détecteurs optiques disposés dans le plan focal de l'optique d'entrée, dont les signaux de sortie peuvent être transformés en informations d'image dans un transducteur processeur, moyennant quoi deux des détecteurs optiques peuvent respectivement être commandés au choix de manière à régler un angle stéréoscopique variable, **caractérisée en ce que**
un moyen d'enregistrement est associé à la caméra stéréoscopique (1), dans lequel des informations préliminaires sont enregistrées sur un objet à photographier et **en ce que** l'angle stéréoscopique des détecteurs optiques peut être réglé en fonction des informations préliminaires de l'objet devant être photographié.

2. Caméra stéréoscopique selon la revendication 1, **caractérisée en ce que** la caméra stéréoscopique (1) comprend un dispositif destiné à enregistrer des informations préliminaires sur l'objet devant être photographié par la suite.

3. Caméra stéréoscopique selon la revendication 1 ou 2, **caractérisée en ce que** les détecteurs optiques sont conçus comme matrice CCD ou lignes CCD (5) qui sont susceptibles d'être appliquées sur un support selon une technique hybride.

4. Caméra stéréoscopique selon l'une quelconque des revendications précédentes, **caractérisée en ce qu'**un multiplexeur (8) est agencé pour la commande sélective entre les détecteurs optiques et le transducteur processeur (6).

5. Caméra stéréoscopique selon l'une quelconque des revendications précédentes, **caractérisée en ce que** des détecteurs optiques adjacents sont munis de couches filtrantes ou de microlentilles spectrales différentes.

6. Caméra stéréoscopique selon l'une quelconque des revendications précédentes, **caractérisée en ce que** l'angle stéréoscopique ∝ entre l'axe principal (10) et le côté de l'angle (11) d'un détecteur optique est compris entre -40° et +40°.
